# EUROPEAN PATENT SPECIFICATION

(11) **EP 3 832 415 B1**
(45) Date of publication and mention of the grant of the patent: **01.04.2026**
(21) Application number: 20208022.2
(22) Date of filing: 17.11.2020
(51) Int. Cl.: G05B 19/418

(54) **AUTOMATION SYSTEM, TRACKING DEVICE OF SAID AUTOMATION SYSTEM, AND METHOD FOR CONTROLLING THE SAME**
AUTOMATISIERUNGSSYSTEM, VERFOLGUNGSVORRICHTUNG DES AUTOMATISIERUNGSSYSTEMS UND STEUERUNGSVERFAHREN DAFÜR
SYSTÈME D'AUTOMATISATION, DISPOSITIF DE SUIVI DUDIT SYSTÈME D'AUTOMATISATION ET SON PROCÉDÉ DE COMMANDE

(30) Priority: 05.12.2019 IT 201900023067
(43) Date of publication of application: 09.06.2021
(73) Proprietor: Friuldev S.r.l., 33084 Cordenons (PN) (IT)
(72) Inventor: SPAGNOL, Marco, 33084 Cordenons (IT)
(74) Representative: Giugni, Diego

(56) References cited:
- US-A1- 2013 211 555
- US-A1- 2017 315 541
- US-B2- 8 312 060

## Description

### TECHNICAL FIELD OF THE INVENTION

The present invention relates to an automation system of a machining to be performed by means of a numerical control apparatus (CNC), to a tracking device of said automation system, and to a method for controlling the system. Specifically, the invention relates to an automation system, to a tracking device, and to a control method which allow to obtain an effective tracking of operating steps of a numerical control apparatus so as to enhance the efficiency of the automation system.

### BACKGROUND OF THE INVENTION

Upon the arrival of an order from a customer for a given machining, an automation system for a machining to be performed by means of a numerical control apparatus (CNC) provides for a step of generating an order code which is associated with customer master data and the machining.

The order code is generated by means of a resource management section provided for in the automation system. The resource management section is typically a conventional management/administrative software loaded on a data processing device, such as a computer, or shared across a network among multiple data processing devices. Alternatively, the resource management system can be a conventional scheduling and planning software or a software that integrates management/administrative functions with scheduling and planning functions, or the like. The resource management section allows to manage data such as for example customer master data, an order request date, an order fulfilment date, an advance estimate of a time of use of the apparatus, and other entirely conventional data.

Subsequently, machine-control instructions are generated each corresponding to various operating steps of the machining to be performed by means of the numerical control apparatus. The machine-control instructions are generated by means of an instruction generation section of the known type. The instruction generation section can generate the machine control instructions automatically, for example by means of CAD/CAM software, or manually, for example by means of manual programming by an operator.

Thus, the machine-control instructions are stored in storage means, such as an internal hard disk or removable memory of the numerical control apparatus or an external hard disk or server placed in communication - by means of a data network - with the numerical control apparatus. In this condition, the machine-control instructions are made available to the numerical control apparatus, creating the sequence of the different operating steps of the machining to be performed.

Specifically, the machine-control instructions are stored in the storage means, for example of the numerical control apparatus, according to a predetermined hierarchical path of folders consisting of several folders/subfolders, i.e. according to a given hierarchical structure, so as to associate the machine-control instructions with the order code. In other words, the machine-control instructions are stored in the folders/subfolders whose path, i.e. the hierarchical structure, depends on a predetermined method of organisation of the folders/subfolders in the storage means, so as to associate the machine-control instructions with the order code.

Thus, the machining carried out by means of the numerical control apparatus is started. In particular, the numerical control apparatus performs the machine control instructions each corresponding to different operating steps of the machining which in turn is associated, together with the customer master data, with the respective order code.

Although this automation system operates adequately in various industries and allows to perform the operating steps of a machining by means of a numerical control apparatus, it however reveals some drawbacks.

As a matter of fact, in this condition it is not possible to carry out an easy and automatic tracking, i.e. monitoring, of the operating steps of a numerical control apparatus in the automation system. In particular, in the industrial sector, there increasingly arises the need for a greater efficiency of the entire automation system, which can be obtained through an effective tracking of each of the operating steps of a numerical control apparatus during a machining.

Specifically, it is desirable to correctly update and mutually align the production step and a business management so as to avoid, for example differences between a planning of a machining and an actual machining status. For example, it is desirable to avoid differences between an estimated time of use of the numerical control apparatus, according to a scheduling, and an actual time of use thereof. As a matter of fact, in this condition an efficiency of the automation system, possibly also in terms of cost, would thus deteriorate.

In order to solve this drawback, there arises the need to implement an effective tracking in the automation system of the operating steps of a numerical control apparatus during a machining. This, to date, is typically carried out manually by an operator initially by means of a step of acquiring an actual machining status of a numerical control apparatus, and a subsequent step for providing this actual machining status to the resource management section of the automation system. Thus, time is wasted and there is no guarantee for a complete absence of human errors, resulting in a decrease in the potential efficiency of the entire automation system.

It is clear that these drawbacks are significant when the automation system provides for a plurality of numerical control apparatuses for each of which it is desirable to perform a respective tracking of the operating steps during the respective machining operations. Furthermore, these drawbacks are further significant when the plurality of numerical control apparatuses consists of apparatuses different from each other, i.e. they provide for operating modes and/or logics different from each other.

Document US2017315541 discloses a device and a system for data acquisition and data processing from a numerical control apparatus (CNC).

Document US8312060 discloses a method and a device for accessing process control data.

Document US2013211555 discloses a device configured to generate or collect data in connection with monitoring and/or controlling an automation system. This device includes a cloud interface for coupling with one or more cloud-based services running on a cloud platform. However, this device is adapted to provide aggregated data from a plurality of numerical control apparatuses (CNC).

Thus, there is the need to provide a solution which overcomes the drawbacks described above.

### SUMMARY OF THE INVENTION

The task of the present invention is to provide an automation system of a machining to be performed by means of a numerical control apparatus (CNC), a device for tracking said automation system, and a control method thereof which allow easy and automatic tracking, i.e. monitoring, of the operating steps of the numerical control apparatus during a machining.

Within the scope of the aforementioned task, an object of the present invention relates to the providing an automation system comprising a tracking device configured to automatically extract suitable information related to each of the operating steps of the numerical control apparatus.

A further object relates to providing an automation system comprising a tracking device configured to automatically acquire a value of at least one machining parameter by means of detection means when performing each of the operating steps of the numerical control apparatus.

A further object relates to providing an automation system comprising a tracking device configured to automatically associate said value of said at least one machining parameter to each of the operating steps of the numerical control apparatus.

A further object relates to providing an automation system comprising a tracking device configured to automatically store - in storage means - the information related to said at least one machining parameter associated with each of the operating steps.

A further object relates to providing an automation system comprising a tracking device that can be easily integrated in a pre-existing automation system. In other words, the tracking device is preferably configured not to affect the operation of the numerical control apparatus and/or the processing operations of a control module thereof.

A further object relates to providing an automation system comprising a tracking device easily connectable to numerical control apparatuses of different types.

The invention is defined in the independent claims.

### BRIEF DESCRIPTION OF THE FIGURES

The further characteristics and advantages of the automation system, of the tracking device of said automation system, and of the control method thereof, according to the present invention, will be more apparent in the following description relating to a preferred embodiment provided purely by way of non-limiting example, with reference to the following figures, wherein:
- Fig. 1 is a schematic representation of an automation system, according to a first preferred embodiment of the present invention,
- Fig. 2 is a schematic representation of an automation system, according to a second preferred embodiment of the present invention.

### DETAILED DESCRIPTION OF THE INVENTION

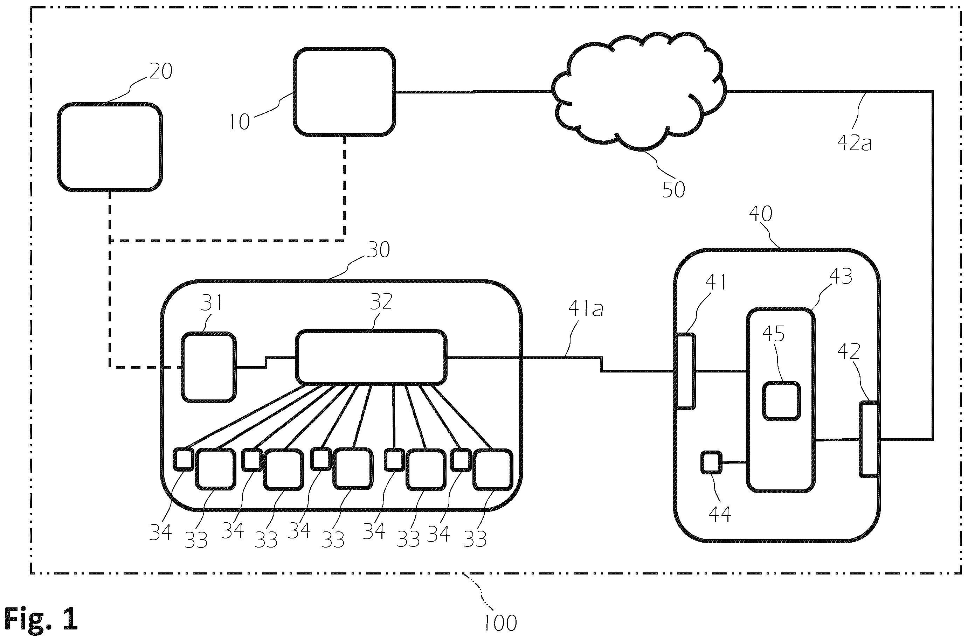

With reference to Fig. 1, a first preferred embodiment of an automation system 100 for performing a machining by means of a numerical control apparatus 30 (CNC) is shown. Specifically, an automation system 100 comprises a resource management section 10, an instruction generation section 20, the numerical control apparatus 30, a tracking device 40, and second storage means 50.

Although an automation system comprising a particular type of numerical control apparatus 30 is described in the preferred embodiment, it is clear that the automation system 100 according to the present invention may comprise one or more numerical control apparatuses 30 of any type, such as for example machine tools, plasma or laser cutting machines, industrial robots, 3D printing systems, or the like.

The resource management section 10 of the automation system 100 is configured to generate, upon receipt of a machining order from the customer, an order code associated with the machining and the customer master data.

The resource management section 10 is typically a conventional management/administrative software loaded on a data processing device, such as a computer, or shared across a network among multiple data processing devices. Alternatively, the resource management system can be a conventional scheduling and planning software or a software that integrates management/administrative functions with scheduling and planning functions, or the like. The resource management section 10 allows to manage data such as for example customer master data, an order request date, an order fulfilment date, an advance estimate of a time of use of the apparatus, and other entirely conventional data.

Subsequently, machine-control instructions are generated each corresponding to various operating steps of the machining to be performed by means of the numerical control apparatus 30. The machine-control instructions are generated by means of an instruction generation section 20 of the known type. The instruction generation section 20 can generate the machine control instructions (partprogram) automatically, for example by means of CAD/CAM software, or manually, for example by means of manual programming by an operator.

Thus, the machine-control instructions are stored in first storage means 31, such as an internal hard disk or removable memory of the numerical control apparatus 30 or an external hard disk or server placed in communication - by means of a data network - with the numerical control apparatus 30. In this condition, the machine-control instructions are made available to the numerical control apparatus 30, creating the sequence of the different operating steps of the machining to be performed.

Specifically, the machine-control instructions are stored in the first storage means 31 according to a predetermined hierarchical path of folders consisting of several folders/subfolders, i.e. according to a given hierarchical structure, so as to associate the machine-control instructions with the order code generating an instruction folder address related to each of the operating steps. In other words, the machine-control instructions are stored in folders/subfolders whose path, or address, is adapted to associate the machine-control instructions with the order code by generating an instruction folder address related to each of the operating steps, as explained hereinafter.

Thus, the machining carried out by means of the numerical control apparatus 30 is started. In particular, the numerical control apparatus 30 performs the machine control instructions each corresponding to different operating steps of the machining which in turn is associated, together with the customer master data, with the respective order code.

In a preferred embodiment, the numerical control apparatus 30 is an n-axes CNC machining units (milling). The numerical control apparatus 30 is actuated by a control module 32 which controls actuator means 33 of known type and which are associated with the respective machining axes of the machine. The numerical control apparatus 30 can for example comprise three linear machining axes with linear actuators and two rotary machining axes with rotary actuators, wherein, for example, one of the rotary axes can be used to rotate a support for a workpiece to be processed and the other rotary axis can be used to actuate a spindle provided with a suitable machining tool. However, this embodiment is not limiting.

In particular, the machining of the workpiece by means of the numerical control apparatus 30 is based on the set of machine control instructions which are converted into movements of the various machining axes by means of the respective actuator means 33. Specifically, after acquiring the machine-control instructions from the first storage means 31, the control module 32 generates commands corresponding to each machining axis and which are sent to the respective actuator means 33.

Furthermore, the numerical control apparatus 30 preferably provides for first detection means 34, such as displacement sensors, encoders or the like, which are configured to detect the actual positions of each of the axes and which are placed in communication with the control module 32. In other words, the first detection means 34 are configured to acquire a value of at least one machining parameter, such as for example an actual position of the machining axes of the numerical control apparatus 30, and communicate it to the control module 32.

According to the present invention, the tracking of the operating steps of the numerical control apparatus 30 is carried out by means of the tracking device 40 which is placed in communication with the control module 32 of the numerical control apparatus 30, preferably through a removable connection.

Specifically, as explained hereinafter, the tracking device 40 is configured to extract, according to a predetermined extraction logic from the numerical control apparatus 30, the order code and suitable information related to each of the machining operating steps. Furthermore, the tracking device 40 is configured to process the order code, said information and a value of at least one machining parameter in an aggregated tracking code related to each of the machining operating steps. Lastly, the tracking device 40 is configured to store - in the second storage means 50, such as a local server, cloud, or the like - said aggregated tracking code thus providing the latter to the automation system 100, as explained hereinafter.

In the automation system 100, the tracking device 40 substantially represents a preferably removable interconnection device between the second storage means 50 and the control module 32 of the numerical control apparatus 30. To this end, the tracking device 40 comprises a first data communication interface 41 for communication with the control module 32 of the numerical control apparatus 30 so as to acquire - from the latter, through at least one data input channel 41a - real-time data relating to the operating steps. The first data communication interface 41 and the data input channel 41a can be suitably selected, as a function of the characteristics of the numerical control apparatus 30, so as to allow a communication such as for example a serial, Ethernet, WLAN (Wireless Local Area Network) communication, or the like.

For example, in a preferred embodiment, the first data communication interface 41 is configured for communication with the control module 32 of the numerical control apparatus 30 that provides for an Ethernet port. To this end, the tracking device 40 may comprise a first data communication interface 41 such as an Ethernet port, and a data input channel 41a such as an Ethernet cable. Thus, the tracking device 40 according to the present invention advantageously manages a communication from the numerical control apparatus 30 without affecting the operation of the latter and/or the processing operations of the control module 32 thereof.

Furthermore, the tracking device 40 comprises a second data communication interface 42 for communication with the second storage means 50 so as to transmit to the latter, through at least one data output channel 42a, real-time data suitably processed and relating to the operating steps, as explained hereinafter. The second data communication interface 42 and the data output channel 42a can be suitably selected, as a function of the characteristics of the second storage means 50, so as to allow a communication such as for example a serial, Ethernet, WLAN (Wireless Local Area Network) communication, or the like.

For example, in a preferred embodiment, the second data communication interface 42 is configured for communication with the second storage means 50, such as a local server. To this end, the tracking device 40 may comprise a second data communication interface 42 such as an Ethernet port, and a data output channel 42a such as an Ethernet cable. Thus, the tracking device 40 according to the present invention advantageously manages a communication from the numerical control apparatus 30 without affecting the operation of the latter and/or the processing operations of the control module 32 thereof.

The tracking device 40 further comprises a control unit 43 (CU) and, in this preferred embodiment, second detection means 44 which are placed in communication with the control unit 43. The second detection means 44, such as a timer, possibly integrated in the control unit 43, are configured to detect at least one machining parameter, such as for example a time, which is associated, as explained hereinafter, with each of the various operating steps carried out by performing the machine-control instructions.

In the preferred embodiment, the control unit 43 is a processor of the known type, such as a microprocessor, which incorporates processing functions on one or more integrated circuits. The control unit 43 receives input data, processes them according to a predetermined logic by means of predetermined instructions stored in a memory thereof, and thus provides output results.

The control unit 43 of the tracking device 40 is configured to be placed in communication with the control module 32 of the numerical control apparatus 30 by means of the first data communication interface 41, through the data input channel 41a, so as to acquire data from the control module 32.

Furthermore, the control unit 43 of the tracking device 40 is configured to be placed in communication with the second storage means 50 by means of the second data communication interface 42, through the data output channel 42a, so as to store, i.e. provide, data in the second storage means 50.

According to the present invention, the control unit 43 comprises a filter section 45 which is configured to automatically extract - from the instruction folder address, according to a predetermined extraction logic - suitable information related to each of the machining operating steps, which are associated with the order code.

Specifically, the filter section 45, such as a portion of the control unit 43 adapted to implement instructions of a software loaded therein, is configured to acquire the instruction folder address through the control module 32 of the numerical control apparatus 30. The instruction folder address, as defined above, defines - in the first storage means 31 - the predetermined hierarchical path of folders consisting of several folders/subfolders containing the machine-control instructions associated with the order code.

Thus, the filter section 45 is configured to extract - from the instruction folder address, according to a predetermined extraction logic - the order code and suitable information related to each of the operating steps, preferably while running. In particular, the filter section 45 is previously programmed, according to a predetermined extraction logic, so as to identify - from the hierarchical path of folders in the first storage means 31, i.e. from the instruction folder address - the order code and the suitable information of the operating steps, preferably while running.

Furthermore, the filter section 45 is configured to generate an aggregated filter code related to each of the operating steps and comprising the respective suitable information and the respective order code.

Furthermore, the filter section 45, or the control unit 43, is configured to automatically acquire a value of at least one machining parameter by means of detection means when performing each of the machining operating steps. In the preferred embodiment, the filter section 45, i.e. the control unit 43, is configured to acquire, when performing each of the operating steps, a value of a machining parameter, such as for example a time, by means of the second detection means 44. However, this embodiment is not limiting, and an embodiment in which the filter section 45, i.e. the control unit 43, is configured to acquire a value of at least one machining parameter such as for example the actual positions of each of the axes, by means of the first detection means 34 of the numerical control machine 30, may be provided for.

Furthermore, the filter section 45, i.e. the control unit 43, is configured to automatically associate said value of at least one machining parameter to the respective aggregated filter code of each of the various operating steps. Thus, the filter section 45, i.e. the control unit 43, is configured to generate an aggregated tracking code related to each of said operating steps and comprising the respective aggregated filter code and the respective value of said at least one machining parameter.

Lastly, the control unit 43, i.e. the filter section 45, is configured to store - in the second storage means 50, through the second data communication interface 42 and the data output channel 42a - the aggregated tracking code, providing the latter to the automation system 100.

Advantageously, in this condition it is possible to automatically provide the information included in the aggregated tracking code to the resource management section 10 for a more efficient management of the automation system 100. For example, by providing the resource management section 10 with a previous aggregated tracking code related to an order code for a machining carried out in the past, it is possible to efficiently manage the time of use of the numerical control apparatus 30 in a subsequent machining, based on the time associated with the previous aggregated tracking code. Thus, the use of the tracking device 40 allows an advantageous enhance in an efficiency of the automation system 100.

The control method of an automation system 100 according to the present invention will now be described hereinafter.

First and foremost, an order code for a machining to be performed is created by means of the resource management section 10. The order code is associated with the machining to be performed and with customer master data, such as a company name, a shipping address and the like. The order code may have any suitably coded form, such as for example an alphanumeric code comprising a plurality of portions associated with customer master data, order data, progressive numerical values or the like, and suitable combinations thereof. A possible order code is for example "1234XY" where "12" defines a sequence number, "34" defines a machining to be performed, and "XY" defines the customer. However, this selection is non-limiting.

Thus, machine-control instructions each corresponding to different operating steps of the machining to be performed by means of the numerical control apparatus 30 are generated by means of the instruction generation section 20. The machine-control instructions are generated for example by means of a CAD/CAM software that generates a suitable file (partprogram). For example, for a machining to be performed, two files (partprogram) corresponding to two machine-control instructions, such as "step1.h" and "step2.h" may be provided for. However, this selection is non-limiting.

Subsequently, the machine-control instructions are stored in the first storage means 31 according to a predetermined hierarchical path of folders consisting of several folders/subfolders, i.e. according to a given hierarchical structure, so as to associate the machine-control instructions with the order code generating an instruction folder address related to each of the operating steps.

In particular, the path consisting of folders/subfolders, or the hierarchical structure, may have any desired structure suitably organised so as to associate the machine-control instructions with the order code. For example, for the machining that provides for the order code "1234XY" and for which the two files (partprogram) "step1.h" and "step2.h" described above are provided for, there may be defined two respective paths consisting of folders/subfolders, or two respective instruction folder address, such as for example:
"CNC-MEM/1234XY/WORKPIECE1/WORKSTEP1-1/step1.h", and
"CNC-MEM/1234XY/WORKPIECE1/WORKSTEP1-2/step2.h"
wherein "CNC-MEM" defines a specific folder provided for in the first storage means 31, "1234XY" defines the order code, "WORKPIECE1" defines the type of workpiece to be produced by machining, "WORKSTEP1-1" and "WORKSTEP1-2" define two distinct subfolders containing the two files (partprogram) "step1.h" and "step2.h" respectively.

It is clear that this path selection, i.e. the instruction folder address, is non-limiting and that the latter may be defined having different hierarchical structures as a function of a suitable and predetermined method for organising and/or naming the folders/subfolders.

Subsequently, the machining carried out by means of the numerical control apparatus 30 is started. Specifically, the numerical control apparatus 30 performs the machine-control instructions each related to the various machining operating steps by means of the actuator means 33 actuated by the control module 32.

When performing the machining, the filter section 45 of the control unit 43 of the tracking device 40 acquires the instruction folder address through the control module 32 of the numerical control apparatus 30.

Thus, the filter section 45 extracts - according to a predetermined extraction logic, from the instruction folder address - the order code and suitable information related to each of said machining operating steps. In particular, the filter section 45 is previously programmed so as to identify - in the predetermined hierarchical path of folders, or the instruction folder address - the order code and the suitable information related to each of said operating steps, preferably being performed.

For example, for each of the instruction folder address described above ("CNC-MEM/1234XY/WORKPIECE1/WORKSTEP1-1/step1.h" and "CNC-MEM/1234XY/WORKPIECE1/WORKSTEP1-2/step2.h") it is possible to suitably programme the filter section 45 to identify, i.e. recognise, and extract the order code ("1234XY") and certain information related to the type of workpiece to be produced ("WORKPIECE1") and the respective machining step, or machine-control instruction ("WORKPIECE1", "WORKSTEP2").

Specifically, the filter section 45 can be programmed to detect and extract the alphanumeric codes comprised between a predetermined separator, such as the symbol " / ", and to identify the type of information of each of these as a function of the relative position thereof in the instruction folder address. However, this selection of the predetermined extraction logic is non-limiting and further predetermined extraction logics may be provided for. For example, in further embodiments the filter section 45 may be programmed to detect a set of separation characters, i.e. regular expressions, such as "//_N", "\\", or the like.

Subsequently, the filter section 45 generates an aggregated filter code related to each of the operating steps and comprising the respective suitable information, extracted and identified as described above, and the respective order code.

The aggregated filter code may have any suitably coded structure, such as for example an alphanumeric code, a map, a table or the like, which is adapted to associate the order code to a respective operating step, or to a respective machine-control instruction of the machining.

Subsequently, the filter section 45, i.e. the control unit 43, automatically acquires a value of at least one machining parameter by means of detection means when performing each of the machining operating steps. In the preferred embodiment, the filter section 45, i.e. the control unit 43, is configured to acquire, when performing each of the operating steps, a value of a machining parameter, such as for example the time, by means of the second detection means 44. For example, the filter section 45, or the control unit 43, automatically detects a run command (RUN) and a stop command (STOP) of each of the machining operating steps, associates to the latter a time and, subsequently, calculates a time range elapsed between the two commands for each of the operating steps, obtaining the machining parameter value.

Furthermore, the filter section 45, i.e. the control unit 43, automatically associates said value of at least one machining parameter to the respective aggregated filter code of each of the various operating steps. Thus, the filter section 45, i.e. the control unit 43, generates an aggregated tracking code related to each of said operating steps and comprising the respective aggregated filter code and the respective value of said at least one machining parameter.

The aggregated tracking code may have any suitably coded structure, such as for example an alphanumeric code, a map, a table or the like, which is adapted to associate the order code to a respective machining step and to a respective value of at least one machining parameter acquired by means of the detection means during each of the operating steps.

Lastly, the control unit 43, i.e. the filter section 45, stores - in the second storage means 50, through the second data communication interface 42 and the data output channel 42a - the aggregated tracking code, providing the latter to the automation system 100.

It is clear that the present invention can be obtained in further embodiments, without departing from the scope claimed.

Described hereinafter are further embodiments of the present invention, which provide for modifications relating to some elements of the automation system 100, of the tracking device 40, and of the control method thereof. Thus, the elements that are substantially unchanged will not be described again and the same reference numerals will be used.

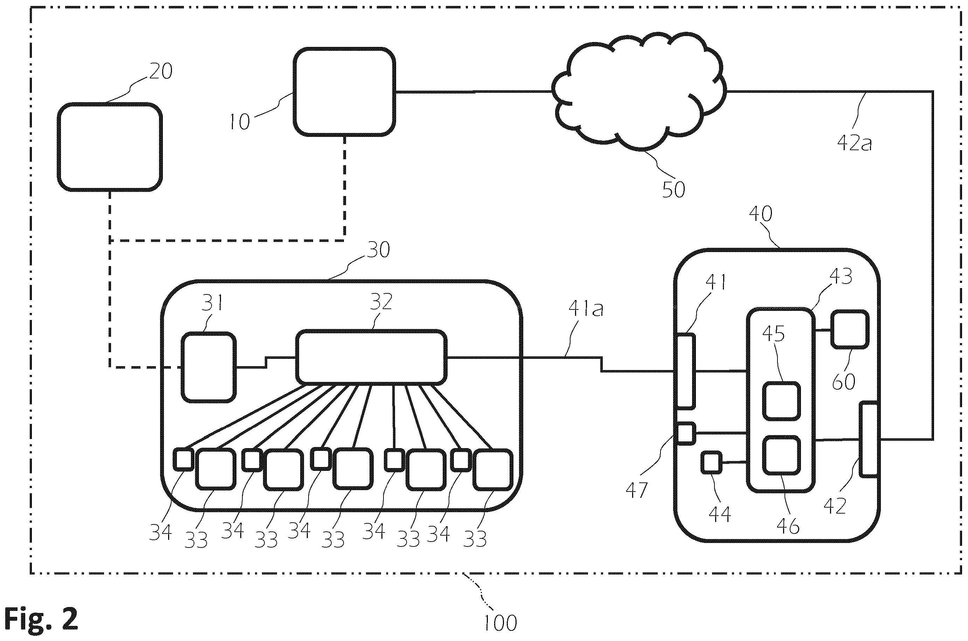

With reference to Fig. 2, a second preferred embodiment of an automation system 100 for performing a machining by means of a numerical control apparatus 30 is shown. In this second embodiment, besides the elements described above, the automation system 100 comprises third storage means 60 preferably comprised in the tracking device 40, a comparison section 46 comprised in the control unit 43, and alert means 47 preferably comprised in the tracking device 40.

The third storage means 60, such as preferably a memory internal to the tracking device 40, are placed in communication with the control unit 43. The third storage means 60 store a predetermined standard value of at least one machining parameter.

The comparison section 46 of the control unit 43 is configured to automatically compare, according to a predetermined comparison logic, the value of at least one machining parameter acquired by means of the first 34 and/or second 44 detection means with a respective predetermined standard value of the same machining parameter, stored in the third storage means 60. In particular, the comparison section 46 is configured to output an alert signal based on the result of the comparison.

Specifically, the comparison section 46, such as a portion of the control unit 43 adapted to implement instructions of a software loaded thereinto, is configured to perform a comparison between the value of at least one machining parameter of the operating step being performed with the respective predetermined standard value. Furthermore, the comparison section 46 is configured to output a given alert signal based on the comparison result generated according to a predetermined comparison logic. For example, an alert signal is output when a difference between the value of at least one machining parameter and the predetermined standard value is greater or less than a predetermined tolerance, or when the value of at least one machining parameter is greater or less than the predetermined standard value. However, this selection is non-limiting.

The alert means 47, such as for example, a warning light, a sound device or a portable device given to an operator, are placed in communication with the control unit 43 so as to output an alert notification upon receipt of the alert signal from the comparison section 46.

In this condition, it is advantageously possible to provide, for example to an operator, information corresponding to the comparison result according to the predetermined comparison logic, thus increasing an efficiency of the automation system 100.

In a variant of this second embodiment, the comparison result may be possibly associated with the aggregated tracking code, when generating the latter, together with the respective value of at least one machining parameter and aggregated filter code, as described above in the first preferred embodiment.

In this condition, the automation system 100 can be advantageously provided with information corresponding to the comparison result according to the predetermined comparison logic, thus increasing an efficiency of the automation system 100.

For example, providing the resource management section 10 with a previous aggregated tracking code related to an order code for a machining carried out in the past it is possible to efficiently estimate the time of use of the numerical control apparatus 30 in a subsequent machining, for example based on possible differences between the actual times of the operating steps of a machining carried out in the past and predetermined standard times.

In a further variant of this second embodiment, the control unit 43 of the tracking device 40 is configured to send a correction signal to the control module 32 of the numerical control apparatus 30 to correct the value of at least one machining parameter based on the comparison result. Specifically, the correction signal is adapted to modify - by means of the control module 32 - the operational status of the actuator means 33 so as to modify the value of at least one machining parameter based on the comparison result according to a predetermined correction logic. For example, the correction signal is adapted to bring the value of at least one machining parameter - toward the respective predetermined standard value, or to increase it or decrease it with respect to said predetermined standard value - back within a suitable tolerance. Alternatively, the correction signal is adapted to modify - by means of the control module 32 - the operational status of the actuator means 33, stopping the operation of the latter. In an embodiment, the speed of performing the machining by acting on an override command of the CNC numerical control apparatus may be increased or decreased to temporarily adjust a speed of a tool so as to optimise machining times, in order to comply with the schedule of the planned activities, by comparing them, for example, with predetermined machining times, predetermined energy consumption values, or other predetermined efficiency indicators.

It is clear that as further embodiments of the present invention are possible without departing from the scope claimed.

For example, in the embodiment described above, the first storage means 31, such as an internal hard disk or removable memory, are provided for in the numerical control apparatus 30. However, there may be provided for an embodiment in which the first storage means 31, such as for example a server, are external to the numerical control apparatus 30 and they are placed in communication, for example through a network, with the control module 32 of the numerical control apparatus 30.

Furthermore, in the description above, the second storage means 50, such as a local server, cloud or the like, are external to the tracking device 40. However, there may be provided for an embodiment in which the second storage means 50, such as for example an internal memory, are provided for in the tracking device 40.

Furthermore, in the description above, the first 34 and second 44 detection means are sensors adapted to detect respectively actual time and positions respectively. However, this selection is non-limiting and the detection means can be any sensor suitable to detect a value of any type of machining parameter depending on the type of numerical control apparatus 30, such as for example a sensor adapted to detect speed, vibration, pressure, signal or source strength, temperature, or the like. Possibly, there may be provided for embodiments in which the first 34 and second 44 detection means are external to the numerical control apparatus 30 and/or to the tracking device 40.

Furthermore, in the description above the numerical control apparatus 30 is a five-axis CNC machining unit (milling). However, there may be provided for an embodiment in which the numerical control apparatus 30 provides for one or more machining axes. Furthermore, the numerical control apparatus 30 can be any type of apparatus that provides for a numerical control such as for example machine tools, plasma or laser cutting machines, industrial robots, 3D printing systems, or the like. For example, in the case of a laser cutting machine, the actuator means 33 are suitable devices, such as for example linear/rotary actuators and a laser device.

Possibly, the automation system 100 may provide for a plurality of numerical control apparatuses 30 placed in communication with respective tracking devices 40 or placed in communication with a common tracking device 40.

Furthermore, the tracking device 40 may comprise a plurality of first data communication interfaces 41 having different characteristics with respect to each other and/or a plurality of second data communication interfaces 42 having different characteristics with respect to each other. In this condition, the tracking device 40 is further versatile and it can be easily integrated in pre-existing automation systems 100. Possibly, in a further embodiment, the first data communication interface 41 and the second data communication interface 42 are integrated with each other in a single data communication interface suitably configured to communicate with the numerical control apparatus 30 and the second storage means 50, as described above.

Furthermore, in the description above, the filter section 45 is configured to extract - from the instruction folder address - the order code and suitable information, related to each of the operating steps, according to a predetermined extraction logic in which alphanumeric codes comprised between a predetermined separator, such as the symbol " / ", are detected and extracted and, subsequently, the types of information of each of these alphanumeric codes are identified as a function of their relative position in the instruction folder address. However, there may be provided for an embodiment in which the filter section 45 is automatically programmed by means of self-learning algorithms. In this condition, the filter section 45 is adapted to automatically distinguish the types of information of each of the read, or identified, alphanumeric codes, i.e. the filter section 45 is programmed to automatically recognise a pattern through statistical computational methods ("Machine Learning"). In particular, the filter section 45 is programmed to automatically distinguish the order code and the type of information of each of the alphanumeric codes by means of an analysis of a plurality of instruction folder addresses which, for example, are previously stored in the first storage means 31. Advantageously, in this condition it is not necessary to differently programme the filter sections 45 of different tracking devices 40 for different numerical control apparatuses 30, but it will be sufficient to perform a single common programming for the filter sections 45 of the different tracking devices 40. In this condition, the tracking device 40 is further versatile and it can be easily integrated in pre-existing automation systems 100.

Furthermore, in the second embodiment the third storage means 60 are internal to the tracking device 40. However, there may be provided for an embodiment in which the third storage means 60 is a memory external to the tracking device 40 or they are comprised in the second storage means 50.

Furthermore, further elements in the automation system 100, such as for example further data processing devices, such as computers, possibly placed in communication with the second storage means 50 to acquire and further process the aggregated tracking code, may be provided for, thus increasing an efficiency of the automation system 100.

In the light of the above description, it is clear that important results have been achieved, overcoming the drawbacks of the prior art, allowing to provide an automation system 100, a tracking device 40, and a control method which allow easy and automatic tracking, i.e. monitoring of the operating steps of the numerical control apparatus 30.

Furthermore, the automation system 100 comprises a tracking device 40 configured to automatically extract suitable information related to each of the operating steps of the numerical control apparatus 30.

Furthermore, the automation system 100 comprises a tracking device 40 configured to automatically acquire a value of at least one machining parameter by means of detection means when performing each of the operating steps of the numerical control apparatus.

Furthermore, the automation system 100 comprises a tracking device 40 configured to automatically associate the value of said at least one machining parameter to each of the operating steps of the numerical control apparatus.

Furthermore, the automation system 100 comprises a tracking device 40 configured to automatically store - in storage means - the information related to said at least one machining parameter associated with each of the operating steps.

Furthermore, the automation system 100 comprises a tracking device 40 which can be easily integrated into a pre-existing automation system. In other words, the tracking device 40 does not affect the operation of the numerical control apparatus 30 and/or the processing operations of the control module 32 thereof.

Lastly, the automation system 100 comprises a tracking device 40 which can be easily connected to numerical control apparatuses 30 of different types and/or to second storage means 50 of different types. Specifically, the tracking device 40 can be easily connected by appropriately selecting the characteristics of the first 41 and second 42 data communication interfaces, and the respective data input channel 41a and data output channel 42a.

## Claims

1. Tracking device (40) for an automation system (100) wherein said automation system (100) comprises:
- a resource management section (10) configured to generate an order code of a machining to be performed,
said order code being associated to a customer master data and to said machining,
- an instruction generation section (20) configured to generate machine-control instructions each corresponding to different operating steps of said machining,
- a numerical control apparatus (30) configured to perform said machine-control instructions by means of actuator means (33) actuated by a control module (32), said control module (32) being in communication with first storage means (31) wherein said machine-control instructions are stored in a given hierarchical path of folders so as to associate said machine-control instructions with said order code according to a given hierarchical structure, generating an instruction folder address related to each of said operating steps,
wherein said tracking device (40) is configured for communicating with said control module (32) of said numerical control apparatus (30) and for:
- acquiring said instruction folder address through said control module (32) of said numerical control apparatus (30),
- extracting according to a predetermined extraction logic from said instruction folder address said order code and information related to each of said operating steps of said machining by means of a filter section (45) of a control unit (43) of said tracking device (40),
- generating an aggregated filter code related to each of said operating steps, said aggregated filter code comprising the respective said information and the respective said order code,
- acquiring a value of at least one machining parameter by means of detection means (34, 44) when performing each of said operating steps,
- associating said value of said at least one machining parameter with the respective said aggregated filter code of each of said operating steps, generating an aggregated tracking code comprising the respective said aggregated filter code and the respective said value of said at least one machining parameter,
- storing in second storage means (50) said aggregated tracking code, providing the latter to said resource management section (10) of said automation system (100) so as to manage said numerical control apparatus (30) in a subsequent machining.

2. Automation system (100) comprising:
- a resource management section (10) configured to generate an order code of a machining to be performed,
said order code being associated to a customer master data and to said machining,
- an instruction generation section (20) configured to generate machine-control instructions each corresponding to different operating steps of said machining,
- a numerical control apparatus (30) configured to perform said machine-control instructions by means of actuator means (33) actuated by a control module (32), said control module (32) being in communication with first storage means (31) wherein said machine-control instructions are stored in a given hierarchical path of folders so as to associate said machine-control instructions with said order code according to a given hierarchical structure, generating an instruction folder address related to each of said operating steps,
**characterised in that**
said automation system (100) further comprises a tracking device (40) according to claim 1, said tracking device (40) being in communication with said control module (32) of said numerical control apparatus (30).

3. The automation system (100) according to claim 2 , wherein said tracking device (40) is placed in communication by means of a removable connection with said control module (32) of said numerical control apparatus (30) by means of a first data communication interface (41) through a data input channel (41a).

4. The automation system (100) according to claim 2 or 3, wherein said tracking device (40) is configured for communicating by means of a removable connection with said second storage means (50) by means of a second data communication interface (42) through a data output channel (42a).

5. The automation system (100) according to any of claims 2 to 4, further comprising:
- third storage means (60) in communication with said control unit (43) of said tracking device (40) and wherein a predetermined standard value of at least one machining parameter is stored,
- a comparison section (46) comprised in said control unit (43) of said tracking device (40), wherein
said comparison section (46) is configured for:
- comparing said value of said at least one machining parameter with said predetermined standard value of the machining parameter,
- generating a comparison result,
- outputting an alert signal based on the comparison result.

6. The automation system (100) according to claim 5, wherein said tracking device (40) comprises alert means (47) placed in communication with said comparison section (46) of said control unit (43) so as to output an alert notification upon receipt of an alert signal.

7. The automation system (100) according to claim 5 or 6, wherein said tracking device (40) is configured for:
- associating said comparison result with said aggregated filter code of each of said operating steps, generating an aggregated tracking code comprising the respective said aggregated filter code, the respective said value of said at least one machining parameter and the respective said comparison result.

8. The automation system (100) according to any of claims 5 to 7, wherein said tracking device (40) is configured for:
- sending a correction signal to said control module (32) to correct said value of said at least one machining parameter based on the comparison result, wherein said correction signal is adapted to modify an operational status of said actuator means (33) so as to adjust said value of said at least one machining parameter based on the comparison result according to a predetermined correction logic.

9. Method for controlling an automation system (100) comprising the steps of:
- generating by means of a resource management section (10) an order code of a machining to be performed,
said order code being associated to a customer master data and to said machining,
- generating by means of an instruction generation section (20) machine-control instructions each corresponding to different operating steps of said machining,
- performing by means of a numerical control apparatus (30) said machine-control instructions by means of actuator means (33) actuated by a control module (32), said control module (32) being in communication with first storage means (31) wherein said machine-control instructions are stored in a given hierarchical path of folders so as to associate said machine-control instructions with said order code according to a given hierarchical structure, generating an instruction folder address related to each of said operating steps,
wherein the method further comprises the steps of:
- acquiring said instruction folder address through said control module (32) of said numerical control apparatus (30),
- extracting according to a predetermined extraction logic from said instruction folder address said order code and information related to each of said operating steps of said machining by means of a filter section (45) of a control unit (43) of a tracking device (40),
- generating an aggregated filter code related to each of said operating steps, said aggregated filter code comprising the respective said information and the respective said order code,
- acquiring a value of at least one machining parameter by means of detection means (34, 44) when performing each of said operating steps,
- associating said value of said at least one machining parameter with the respective said aggregated filter code of each of said operating steps, generating an aggregated tracking code comprising the respective said aggregated filter code and the respective said value of said at least one machining parameter,
- storing in second storage means (50) said aggregated tracking code, providing the latter to said resource management section (10) of said automation system (100) so as to manage said numerical control apparatus (30) in a subsequent machining.

10. The method for controlling an automation system (100) according to claim 9, wherein in said step of extracting said order code and said information from said instruction folder address according to a predetermined extraction logic,
said filter section (45) automatically recognises said order code and the type of said information by means of computational statistical methods.

## Patentansprüche

1. Verfolgungsvorrichtung (40) für ein Automatisierungssystem (100), wobei das Automatisierungssystem (100) umfasst:
- einen Ressourcenverwaltungsabschnitt (10), ausgebildet zum Erzeugen eines Auftragscodes einer auszuführenden Bearbeitung,
wobei der Auftragscode mit Kundenstammdaten und der Bearbeitung verbunden ist,
- einen Anweisungserzeugungsabschnitt (20), ausgebildet zum Erzeugen von Maschinensteueranweisungen, die jeweils verschiedenen Betriebsschritten der Bearbeitung entsprechen,
- eine numerische Steuervorrichtung (30), ausgebildet zum Ausführen der Maschinensteueranweisungen durch Stellgliedmittel (33), die durch ein Steuermodul (32) betätigt werden,
wobei das Steuermodul (32) mit einem ersten Speichermittel (31) in Kommunikation steht, in dem die Maschinensteueranweisungen in einem vorgegebenen hierarchischen Pfad von Ordnern gespeichert sind, um die Maschinensteueranweisungen mit dem Auftragscode gemäß einer vorgegebenen hierarchischen Struktur zu verbinden, wobei eine Anweisungsordneradresse erzeugt wird, die sich auf jeden der Betriebsschritte bezieht, wobei die Verfolgungsvorrichtung (40) zum Kommunizieren mit dem Steuermodul (32) der numerischen Steuervorrichtung (30) ausgebildet ist und zum:
- Erfassen der Anweisungsordneradresse durch das Steuermodul (32) der numerischen Steuervorrichtung (30),
- Extrahieren des Auftragscodes und von Informationen, die sich auf jeden der Betriebsschritte der Bearbeitung beziehen, gemäß einer vorbestimmten Extrahierungslogik aus der Anweisungsordneradresse mit einem Filterabschnitt (45) einer Steuereinheit (43) der Verfolgungsvorrichtung (40),
- Erzeugen eines Summenfiltercodes in Bezug auf jeden der Betriebsschritte, wobei der Summenfiltercode die jeweiligen Informationen und den jeweiligen Auftragscode umfasst,
- Erfassen eines Wertes wenigstens eines Bearbeitungsparameters mit Erfassungsmittel (34, 44) beim Durchführen von jedem der Betriebsschritte,
- Verbinden des Wertes des wenigstens einen Bearbeitungsparameters mit dem jeweiligen Summenfiltercode von jedem der Betriebsschritte, Erzeugen eines Summenverfolgungscodes, umfassend den jeweiligen Summenfiltercode und den jeweiligen Wert des wenigstens einen Bearbeitungsparameters,
- Speichern des Summenverfolgungscodes in einem zweiten Speichermittel (50), Bereitstellen von diesem für den Ressourcenverwaltungsabschnitt (10) des Automatisierungssystems (100), um die numerische Steuervorrichtung (30) in einer folgenden Bearbeitung zu verwalten.

2. Automatisierungssystem (100), umfassend:
- einen Ressourcenverwaltungsabschnitt (10), ausgebildet zum Erzeugen eines Auftragscodes einer auszuführenden Bearbeitung,
wobei der Auftragscode mit Kundenstammdaten und der Bearbeitung verbunden ist,
- einen Anweisungserzeugungsabschnitt (20), ausgebildet zum Erzeugen von Maschinensteueranweisungen, die jeweils verschiedenen Betriebsschritten der Bearbeitung entsprechen,
- eine numerische Steuervorrichtung (30), ausgebildet zum Ausführen der Maschinensteueranweisungen durch Stellgliedmittel (33), die durch ein Steuermodul (32) betätigt werden, wobei das Steuermodul (32) mit einem ersten Speichermittel (31) in Kommunikation steht, in dem die Maschinensteueranweisungen in einem vorgegebenen hierarchischen Pfad von Ordnern gespeichert sind, um die Maschinensteueranweisungen mit dem Auftragscode gemäß einer vorgegebenen hierarchischen Struktur zu verbinden, wobei eine Anweisungsordneradresse erzeugt wird, die sich auf jeden der Betriebsschritte bezieht,
**dadurch gekennzeichnet, dass**
das Automatisierungssystem (100) ferner eine Verfolgungsvorrichtung (40) nach Anspruch 1 umfasst, wobei die Verfolgungsvorrichtung (40) mit dem Steuermodul (32) der numerischen Steuervorrichtung (30) in Kommunikation steht.

3. Automatisierungssystem (100) nach Anspruch 2, wobei die Verfolgungsvorrichtung (40) mit einer lösbaren Verbindung mit dem Steuermodul (32) der numerischen Steuervorrichtung (30) über eine erste Datenkommunikationsschnittstelle (41) durch einen Dateneingabekanal (41a) in Kommunikation gebracht wird.

4. Automatisierungssystem (100) nach Anspruch 2 oder 3, wobei die Verfolgungsvorrichtung (40) zum Kommunizieren mittels einer lösbaren Verbindung mit dem zweiten Speichermittel (50) über eine zweite Datenkommunikationsschnittstelle (42) durch einen Datenausgabekanal (42a) ausgebildet ist.

5. Automatisierungssystem (100) nach einem der Ansprüche 2 bis 4, ferner umfassend:
- ein drittes Speichermittel (60) in Kommunikation mit der Kommunikationseinheit (43) der Verfolgungsvorrichtung (40), wobei ein vorbestimmter Standardwert wenigstens eines Bearbeitungsparameters gespeichert ist,
- einen Vergleichsabschnitt (46), enthalten in der Steuereinheit (43) der Verfolgungsvorrichtung (40), wobei
der Vergleichsabschnitt (46) ausgebildet ist zum:
- Vergleichen des Wertes des wenigstens einen Bearbeitungsparameters mit dem vorbestimmten Standardwert des Bearbeitungsparameters,
- Erzeugen eines Vergleichsergebnisses,
- Ausgeben eines Warnsignals auf der Basis des Vergleichsergebnisses.

6. Automatisierungssystem (100) nach Anspruch 5, wobei die Verfolgungsvorrichtung (40) Warnmittel (47) umfasst, die mit dem Vergleichsabschnitt (46) der Steuereinheit (43) in Kommunikation stehen, um bei Empfang eines Alarmsignals eine Alarmmeldung auszugeben.

7. Automatisierungssystem (100) nach Anspruch 5 oder 6, wobei die Verfolgungsvorrichtung (40) ausgebildet ist zum:
- Verbinden des Vergleichsergebnisses mit dem Summenfiltercode von jedem der Betriebsschritte, Erzeugen eines Summenverfolgungscodes, umfassend den jeweiligen Summenfiltercode, den jeweiligen Wert des wenigstens einen Bearbeitungsparameters und das jeweilige Vergleichsergebnis.

8. Automatisierungssystem (100) nach einem der Ansprüche 5 bis 7, wobei die Verfolgungsvorrichtung (40) ausgebildet ist zum:
- Senden eines Korrektursignals an das Steuermodul (32), um den Wert des wenigstens einen Bearbeitungsparameters auf der Basis des Vergleichsergebnisses zu korrigieren, wobei das Korrektursignal zum Modifizieren eines Betriebsstatus der Stellgliedmittel (33) angepasst ist, um den Wert des wenigstens einen Bearbeitungsparameters auf der Basis des Vergleichsergebnisses gemäß einer vorbestimmten Korrekturlogik anzupassen.

9. Verfahren zum Steuern eines Automatisierungssystems (100), umfassend die Schritte zum:
- Erzeugen eines Auftragscodes für eine durchzuführende Bearbeitung mittels eines Ressourcenverwaltungsabschnitts (10),
wobei der Auftragscode mit Kundenstammdaten und der Bearbeitung verbunden ist,
- Erzeugen von Maschinensteueranweisungen mittels eines Anweisungserzeugungsabschnitts (20), jeweils entsprechend verschiedenen Betriebsschritten der Bearbeitung,
- Ausführen der Maschinensteueranweisungen mittels einer numerischen Steuervorrichtung (30) durch Stellgliedmittel (33), die durch ein Steuermodul (32) betätigt werden, wobei das Steuermodul (32) mit einem ersten Speichermittel (31) in Kommunikation steht, in dem die Maschinensteueranweisungen in einem vorgegebenen hierarchischen Pfad von Ordnern gespeichert sind, um die Maschinensteueranweisungen mit dem Auftragsccode gemäß einer vorgegebenen hierarchischen Struktur zu verbinden, wobei eine Anweisungsordneradresse erzeugt wird, die sich auf jeden der Betriebsschritte bezieht, wobei das Verfahren ferner die Schritte umfasst zum:
- Erfassen der Anweisungsordneradresse durch das Steuermodul (32) der numerischen Steuervorrichtung (30),
- Extrahieren des Auftragscodes und von Informationen, die sich auf jeden der Betriebsschritte der Bearbeitung beziehen, gemäß einer vorbestimmten Extrahierungslogik aus der Anweisungsordneradresse mit einem Filterabschnitt (45) einer Steuereinheit (43) einer Verfolgungsvorrichtung (40),
- Erzeugen eines Summenfiltercodes in Bezug auf jeden der Betriebsschritte, wobei der Summenfiltercode die jeweiligen Informationen und den jeweiligen Auftragscode umfasst,
- Erfassen eines Wertes wenigstens eines Bearbeitungsparameters mit Erfassungsmittel (34, 44) beim Durchführen von jedem der Betriebsschritte,
- Verbinden des Wertes des wenigstens einen Bearbeitungsparameters mit dem jeweiligen Summenfiltercode von jedem der Betriebsschritte, Erzeugen eines Summenverfolgungscodes, umfassend den jeweiligen Summenfiltercode und den jeweiligen Wert des wenigstens einen Bearbeitungsparameters,
- Speichern des Summenverfolgungscodes in einem zweiten Speichermittel (50), Bereitstellen von diesem für den Ressourcenverwaltungsabschnitt (10) des Automatisierungssystems (100), um die numerische Steuervorrichtung (30) in einer folgenden Bearbeitung zu verwalten.

10. Verfahren zum Steuern eines Automatisierungssystems (100) nach Anspruch 9, wobei
im Schritt zum Extrahieren des Auftragscodes und der Informationen aus der Anweisungsordneradresse gemäß einer vorbestimmten Extrahierungslogik
der Filterabschnitt (45) automatisch den Auftragscode und die Art der Informationen mit Hilfe von statistischen Berechnungsverfahren erkennt.

## Revendications

1. - Dispositif de suivi (40) pour un système d'automatisation (100), ledit système d'automatisation (100) comprenant :
- une section de gestion de ressources (10) configurée pour générer un code de commande d'un usinage à effectuer, ledit code de commande étant associé à des données maître de client et audit usinage ;
- une section de génération d'instructions (20) configurée pour générer des instructions de commande machine correspondant chacune à différentes étapes de fonctionnement dudit usinage ;
- un appareil de commande numérique (30) configuré pour exécuter lesdites instructions de commande machine à l'aide de moyens actionneurs (33) actionnés par un module de commande (32), ledit module de commande (32) étant en communication avec des premiers moyens de stockage (31), lesdites instructions de commande machine étant stockées dans un chemin hiérarchique donné de dossiers de manière à associer lesdites instructions de commande machine audit code de commande conformément à une structure hiérarchique donnée, en générant une adresse de dossier d'instructions corrélée à chacune desdites étapes de fonctionnement,
dans lequel ledit dispositif de suivi (40) est configuré pour communiquer avec ledit module de commande (32) dudit appareil de commande numérique (30) et pour :
- acquérir ladite adresse de dossier d'instructions par le biais dudit module de commande (32) dudit appareil de commande numérique (30) ;
- extraire, conformément à une logique d'extraction prédéterminée, à partir de ladite adresse de dossier d'instructions, ledit code de commande et des informations relatives à chacune des étapes de fonctionnement dudit usinage au moyen d'une section de filtrage (45) d'une unité de commande (43) dudit dispositif de suivi (40) ;
- générer un code de filtrage agrégé relatif à chacune desdites étapes de fonctionnement, ledit code de filtrage agrégé comprenant lesdites informations respectives et ledit code de commande respectif,
- acquérir une valeur d'au moins un paramètre d'usinage à l'aide de moyens de détection (34, 44) lors de l'exécution de chacune desdites étapes de fonctionnement ;
- associer ladite valeur dudit au moins un paramètre d'usinage audit code de filtrage agrégé respectif de chacune desdites étapes de fonctionnement, générer un code de suivi agrégé comprenant ledit code de filtrage agrégé respectif et ladite valeur respective dudit au moins un paramètre d'usinage ;
- stocker dans des deuxièmes moyens de stockage (50) ledit code de suivi agrégé, fournir ce dernier à ladite section de gestion de ressources (10) dudit système d'automatisation (100) de façon à gérer ledit appareil de commande numérique (30) lors d'un usinage ultérieur.

2. - Système d'automatisation (100) comprenant :
- une section de gestion de ressources (10) configurée pour générer un code de commande d'un usinage à réaliser, ledit code de commande étant associé à des données maître de client et audit usinage,
- une section de génération d'instructions (20) configurée pour générer des instructions de commande machine correspondant chacune à différentes étapes de fonctionnement dudit usinage,
- un appareil de commande numérique (30) configuré pour exécuter lesdites instructions de commande machine à l'aide de moyens actionneurs (33) actionnés par un module de commande (32), ledit module de commande (32) étant en communication avec des premiers moyens de stockage (31), lesdites instructions de commande machine étant stockées dans un chemin hiérarchique donné de dossiers de manière à associer lesdites instructions de commande machine audit code de commande conformément à une structure hiérarchique donnée, en générant une adresse de dossier d'instructions corrélée à chacune desdites étapes de fonctionnement,
**caractérisé par le fait que**
ledit système d'automatisation (100) comprend en outre un dispositif de suivi (40) selon la revendication 1, ledit dispositif de suivi (40) étant en communication avec ledit module de commande (32) dudit appareil de commande numérique (30).

3. - Système d'automatisation (100) selon la revendication 2, dans lequel ledit dispositif de suivi (40) est placé en communication au moyen d'une connexion amovible avec ledit module de commande (32) dudit appareil de commande numérique (30) au moyen d'une première interface de communication de données (41) par l'intermédiaire d'un canal d'entrée de données (41a).

4. - Système d'automatisation (100) selon la revendication 2 ou 3, dans lequel ledit dispositif de suivi (40) est configuré pour communiquer au moyen d'une connexion amovible avec lesdits deuxièmes moyens de stockage (50) au moyen d'une seconde interface de communication de données (42) par l'intermédiaire d'un canal de sortie de données (42a).

5. - Système d'automatisation (100) selon l'une quelconque des revendications 2 à 4, comprenant en outre :
- des troisièmes moyens de stockage (60) en communication avec ladite unité de commande (43) dudit dispositif de suivi (40) et dans lesquels est stockée une valeur standard prédéterminée d'au moins un paramètre d'usinage,
- une section de comparaison (46) comprise dans ladite unité de commande (43) dudit dispositif de suivi (40), où
ladite section de comparaison (46) est configurée pour :
- comparer ladite valeur dudit au moins un paramètre d'usinage à ladite valeur standard prédéterminée du paramètre d'usinage ;
- générer un résultat de comparaison ;
- délivrer un signal d'alerte sur la base du résultat de comparaison.

6. - Système d'automatisation (100) selon la revendication 5, dans lequel ledit dispositif de suivi (40) comprend des moyens d'alerte (47) placés en communication avec ladite section de comparaison (46) de ladite unité de commande (43) de manière à délivrer une notification d'alerte à la réception d'un signal d'alerte.

7. - Système d'automatisation (100) selon la revendication 5 ou 6, dans lequel ledit dispositif de suivi (40) est configuré pour :
- associer ledit résultat de comparaison audit code de filtrage agrégé de chacune desdites étapes de fonctionnement, générer un code de suivi agrégé comprenant ledit code de filtrage agrégé respectif, ladite valeur respective dudit au moins un paramètre d'usinage et ledit résultat de comparaison respectif.

8. - Système d'automatisation (100) selon l'une quelconque des revendications 5 à 7, dans lequel ledit dispositif de suivi (40) est configuré pour :
- envoyer un signal de correction audit module de commande (32) pour corriger ladite valeur dudit au moins un paramètre d'usinage sur la base du résultat de comparaison, ledit signal de correction étant apte à modifier un état de fonctionnement desdits moyens actionneurs (33) de manière à ajuster ladite valeur dudit au moins un paramètre d'usinage sur la base du résultat de comparaison conformément à une logique de correction prédéterminée.

9. - Procédé de commande d'un système d'automatisation (100) comprenant les étapes consistant à :
- générer au moyen d'une section de gestion de ressources (10) un code de commande d'un usinage à réaliser, ledit code de commande étant associé à des données maître de client et audit usinage,
- générer au moyen d'une section de génération d'instructions (20) des instructions de commande machine correspondant chacune à différentes étapes de fonctionnement dudit usinage,
- exécuter au moyen d'un appareil de commande numérique (30) lesdites instructions de commande machine à l'aide de moyens actionneurs (33) actionnés par un module de commande (32), ledit module de commande (32) étant en communication avec des premiers moyens de stockage (31), lesdites instructions de commande machine étant stockées dans un chemin hiérarchique donné de dossiers de manière à associer lesdites instructions de commande machine audit code de commande conformément à une structure hiérarchique donnée, en générant une adresse de dossier d'instructions corrélée à chacune desdites étapes de fonctionnement,
le procédé comprenant en outre les étapes consistant à :
- acquérir ladite adresse de dossier d'instructions par l'intermédiaire dudit module de commande (32) dudit appareil de commande numérique (30) ;
- extraire, conformément à une logique d'extraction prédéterminée, à partir de ladite adresse de dossier d'instructions, ledit code de commande et des informations relatives à chacune desdites étapes de fonctionnement dudit usinage au moyen d'une section de filtrage (45) d'une unité de commande (43) d'un dispositif de suivi (40) ;
- générer un code de filtrage agrégé relatif à chacune desdites étapes de fonctionnement, ledit code de filtrage agrégé comprenant lesdites informations respectives et ledit code de commande respectif ;
- acquérir une valeur d'au moins un paramètre d'usinage à l'aide de moyens de détection (34, 44) lors de l'exécution de chacune desdites étapes de fonctionnement ;
- associer ladite valeur dudit au moins un paramètre d'usinage audit code de filtrage agrégé respectif de chacune desdites étapes de fonctionnement, générer un code de suivi agrégé comprenant ledit code de filtrage agrégé respectif et ladite valeur respective dudit au moins un paramètre d'usinage,
- stocker dans des deuxièmes moyens de stockage (50) ledit code de suivi agrégé, fournir ce dernier à ladite section de gestion de ressources (10) dudit système d'automatisation (100) afin de gérer ledit appareil de commande numérique (30) lors d'un usinage ultérieur.

10. - Procédé de commande d'un système d'automatisation (100) selon la revendication 9, dans lequel, dans ladite étape d'extraction dudit code de commande et desdites informations à partir de ladite adresse de dossier d'instructions conformément à une logique d'extraction prédéterminée, ladite section de filtrage (45) reconnaît automatiquement ledit code de commande et le type desdites informations au moyen de méthodes statistiques de calcul.
